# EUROPEAN PATENT SPECIFICATION

(11) **EP 3 694 218 B1**
(45) Date of publication and mention of the grant of the patent: **31.01.2024**
(21) Application number: 20155734.5
(22) Date of filing: 05.02.2020
(51) Int. Cl.: H04N 21/45, H04N 21/442, H04N 21/658, H04N 21/433

(54) **RULES-BASED JUST-IN-TIME MOBILE CONTENT SERVICE**
REGELBASIERTER JUST-IN-TIME-DIENST FÜR MOBILE INHALTE
SERVICE DE CONTENU MOBILE JUSTE-À-TEMPS BASÉ SUR DES RÈGLES

(30) Priority: 06.02.2019 US 201962802130 P; 22.01.2020 US 202016749866
(43) Date of publication of application: 12.08.2020
(73) Proprietor: T-Mobile USA, Inc., Bellevue, WA 98006-1350 (US)
(72) Inventor: Chauhan, Kanakrai, Bellevue, WA Washington 98006-1350 (US); Awasthi, Ankit, Bellevue, WA Washington 98006-1350 (US)
(74) Representative: Swindell & Pearson Limited

(56) References cited:
- WO-A1-01/49027
- WO-A1-02/062009
- US-A1- 2003 221 191

## Description

### CROSS-REFERENCE TO RELATED APPLICATION

This application claims priority to U.S. Provisional Patent Application No. 62/802,130, filed on February 6, 2019, entitled "Rules-Based Just-In-Time Mobile Content".

### BACKGROUND

Mobile users demand multimedia streaming. Today, "multimedia streaming" often refers to retrieving and rendering video and audio from a data store, commonly via the internet. While some refer to "multimedia data" as content from multiple forms of media including text, still images, video, and audio, the term is sometimes used synonymously with video and audio content, and perhaps to a lesser extent, still images. One of the reasons for this association is that still images, music, podcasts, and video (with audio) make heavy use of computing, computer-readable memory, and network resources. As used throughout this description, "multimedia" is not restricted to video and audio content.

Streaming multimedia that changes over time (such as video and audio) over a network particularly creates technical issues in computing, computer-readable memory, and network resource management, to name a few. For instance, the quality of multimedia content is a function of network bandwidth. Higher resolution multimedia content generally makes use of more space, memory, and/or bandwidth than lower resolution multimedia content. For example, a data frame for a 4K video is much larger than that of a 720i image. However, if the network struggles to accommodate multimedia data frames with consistent timing, the user experience during playback of the multimedia content while streaming may not be acceptable.

Multimedia streaming may be performed, e.g., on set-top boxes and personal computers, which render multimedia content on relatively large form factors and which have access to relatively large amounts of computing resources, computer-readable memory, bandwidth, and power. These may be used to implement certain technical solutions to ensure smooth and timely renderings of multimedia at high resolutions, incorporating an assumption that the large-form-factor device will be connected to a persistent source of power and unlimited network (e.g., Internet) source of multimedia content, such that pre-loading multimedia content (especially partial files on demand ("data on demand")) on the device may not be significant enough to consider. However, mobile devices, which have relatively smaller form factors and less computing resources, computer-readable memory, bandwidth, and power are not in some instances able to make use of those solutions. Therefore, for small-form-factor devices, the benefits of data-on-demand solutions can be significant enough to consider.

US 2003/0221191 A1 discloses a method and a device that selects a commercial message for presentation based on user profile criteria. A programming content signal is received at a customer premises equipment. A stored commercial message is selected for presentation during presentation of the programming content signal. The selected commercial message is selected based on the summary information contained by the selected commercial message. Each selected commercial message is then presented during the programming content signal by inserting each selected commercial message into the received programming content signal by presenting the selected commercial message in place of the programming content signal. Information relating to each commercial message presented and/or an interaction with a user can be recorded and sent to a central location.

### BRIEF DESCRIPTION OF THE DRAWINGS

FIG. 1 illustrates an example system to implement rules-based just-in-time multimedia content servicing.
FIG. 2 shows an example of a mobile device on the client side.
FIG. 3 illustrates an example of an architecture diagram in the context of a mobile platform for rules-based just-in-time multimedia content servicing and for mobile application management.
FIG. 4 is a flow diagram of an example process performed at least in part by the mobile device for surfacing multimedia content.
FIG. 5 is a flow diagram of an example process performed at least in part by the mobile device for collecting usage and behavior data of the user.
FIG. 6 is a flow diagram of an example process performed at least in part by a rules-based just-in-time engine for determining multimedia content for sending to the mobile device.

### DETAILED DESCRIPTION

In one or more embodiments, techniques are provided to implement rules-based just-in-time (RBJIT) multimedia content streaming in a "data on demand" solution to overcome the above-noted constraints and other constraints to which mobile devices are particularly vulnerable for multimedia streaming. The disclosed techniques, while considered particularly advantageous in a mobile environment, nonetheless may be applicable, in whole or in part, to some stationary user devices, and potentially even those having large form factors. In some embodiments, an RBJIT engine ("RBJIT") may collect from the mobile device information about a user, any groups that the user is associated with, and/or the set of all users in general. The RBJIT may preferentially select for user display ("surfacing") by the mobile device multimedia content and content suggestions based on this information, limiting payload response to surface only multimedia content which is required or requested to be shown in the user interface, with the greater likelihood that the surfaced multimedia content will be of interest to a user being substantially increased. In this way, among other improvements, browsing time for a user on a mobile device with a limited form factor is reduced, and network bandwidth is conserved by not surfacing multimedia content that the user ultimately will not view. Furthermore, as the RBJIT collects an increasingly large amount of information, predictions of user interest in multimedia content will continue to improve.

The RBJIT may make use of mobile-based applications, both to surface multimedia content and to collect user information. Managing and versioning mobile-based applications have their own challenges. Techniques to manage and version mobile-based applications are also disclosed herein.

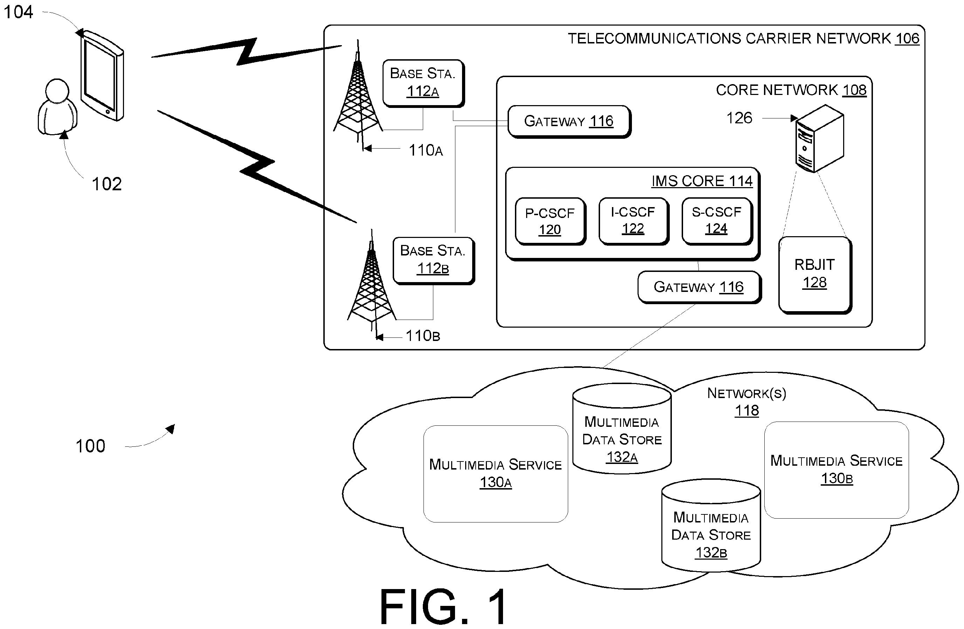

FIG. 1 illustrates an example system 100 to implement rules-based just-in-time multimedia content servicing. In FIG. 1, a user 102 has a mobile device 104. The mobile device 104 is configured to communicate over a telecommunications carrier network 106 which includes a core network 108 of a mobile network operator (MNO). In some embodiments, the telecommunications carrier network is a cellular network and the MNO is a cellular provider. Mobile devices 104 on a cellular network such as the telecommunications carrier network 106 connect via cellular antennas such as antennas 110a and 110b over radio via a cellular air interface to a core network 108 of a mobile network operator (MNO).

In some embodiments, the antennas 110a and 110b may feed to one or more base stations 112a and 112b, which then may access the core network 108 over a wired connection known as a backhaul. The backhaul is often comprised of fiber optic communications cables, although no limitation should be inferred. A portion of the telecommunications carrier network 106 that includes the antennas, cell towers, and base stations may transfer signals from the mobile device 104 to the core network 108, i.e. providing access to the core network 108. Therefore, this portion of the telecommunications carrier network 106 is sometimes called the access network.

In 4G and later embodiments, the core network 108 may include an IP Multimedia Subsystem (IMS) core 114. The IMS core 114 may be accessed via one or more gateways (two gateways 116a and 116b are shown by way of example) and related components that are tasked with providing connectivity between the telecommunications carrier network 106 and mobile devices such as the mobile device 104, by acting as a point of entry and exit for data traffic. In turn, the IMS core 114 may provide the user devices with data access to external packet data networks 118, such as the networks of other telecommunications carrier networks or the Internet.

The IMS core 114 may include a Proxy Call Session Control Function (P-CSCF) 120 or an equivalent function. The P-CSCF 120 may route incoming Session Initiation Protocol (SIP) messages to an IMS registrar server. The P-CSCF 120 may also safeguard the security of the IMS core 114 by handling Internet Protocol Security (IPSec) for communications that are exchanged with mobile devices. In some alternative instances, instead of SIP sessions, the P-CSCF 120 may handle Remote Authentication Dial-In User Service (RADIUS) sessions. The P-CSCF 120 may interact with an Interrogating CSCF (I-CSCF) 122 and a Serving CSCF (S-CSCF) 124. In some instances, the I-CSCF 122 may be an inbound SIP proxy server of the IMS core 114. During IMS registration of the mobile device 104, the I-CSCF 122 may query a home subscriber server (HSS) to designate an S-CSCF 124 to service the mobile device 104. The I-CSCF 122 may be further responsible for routing incoming IMS session requests and terminating IMS sessions requests.

The core network 108 also may include one or more application servers, including without limitation an enterprise information technology (EIT) server 126, to implement application servers, perform back end processing for network connectivity for the MNO (including accessing of multimedia in some embodiments), and host an RBJIT 128 in the core network 106 in some embodiments.

The core network 108 is the portion of the telecommunications carrier network 106 where routing, billing, policy implementation and other communications services may be implemented by, for example, a Policy and Charging Rules Function (PCRF) or another equivalent rules engine and/or billing function, which may be hosted on the EIT server 126 in some embodiments. For example, a billing function may enable the telecommunications carrier network 106 to monitor services, such as data, voice, text, etc., that are used by subscribers of the telecommunications carrier network 106 and charge the subscribers and/or other parties in real-time based on service usage. In various embodiments, the billing function may be an Online Charging System (OCS) or another equivalent core network component of the telecommunications carrier network 106.

In some embodiments, the RBJIT 128 interfaces via the network 118 with one or more multimedia services (in FIG. 1, two multimedia services 130a and 130b are shown by way of example). The multimedia services 130a and 130b may have their own respective data stores 132a and 132b of multimedia content. The multimedia services 130a and 130b may be commercial services each with their own independent billing system and subscription account system with the user 102. Accordingly, the multimedia services 130a and 130b may have their own surfacing algorithms. In at least some embodiments, surfacing and analysis of first- and third-party content may support A/B testing related to both new and existing content. While the RBJIT 128 may collect information from the multimedia services 130a and 130b, the operation of the RBJIT 128 may be independent of the multimedia services 130a and 130b. Therefore, the RBJIT 128 may implement its data on demand technique to surface only a limited amount of required data supplied by the multimedia services 130a and 130b as well.

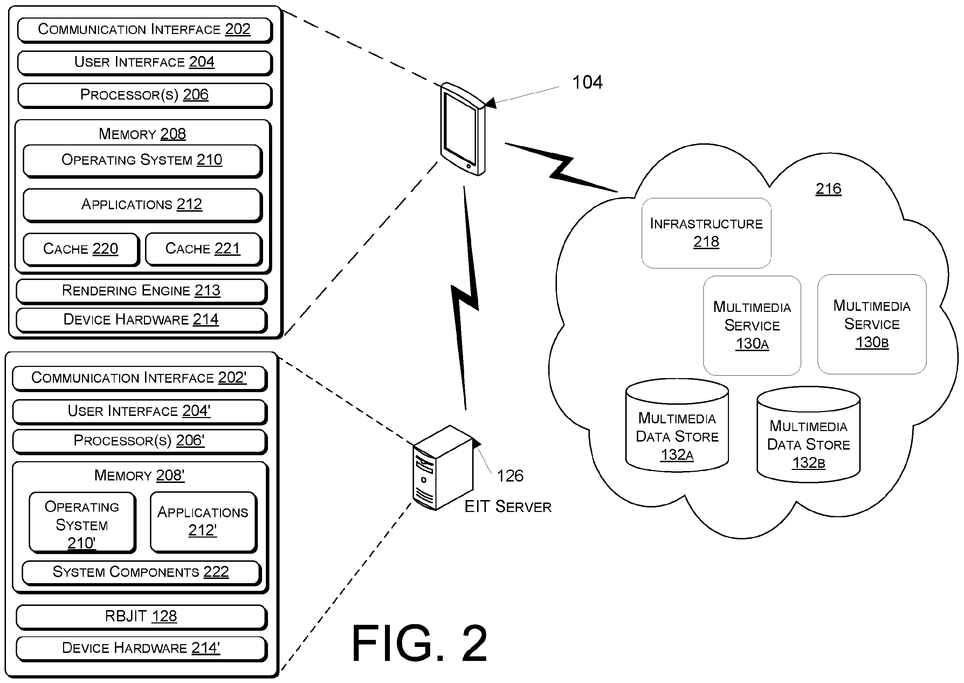

In some embodiments, the RBJIT 128 also receives usage and behavior data for the user 102 via the mobile device 104. Functionality for elements of a cellular network and user equipment for the RBJIT service described herein, as well as mobile application management, are generally hosted on computing devices. FIG. 2 shows an example of the mobile device 104 on the client side and the EIT server on the server side.

Exemplary mobile devices 104 include without limitation smaller laptops, embedded devices, tablet computers, and smartphones which have relatively smaller form factors than larger devices such as larger laptops, smart televisions, and personal computer monitors (including all-in-ones). Thus, there may be limited screen space for viewing content, browsing, and configuring the mobile device 104.

The mobile device 104 may have a communication interface 202, a user interface 204, one or more processors 206, and a computer readable memory 208. The communication interface 202 may be a network interface card supporting Ethernet and/or Wi-Fi and/or any number of other physical and/or datalink protocols. Generally, the network will include a cellular network. Accordingly, the communication interface 202 will include a cellular radio and radio access software layer. The user interface 204 may enable a user to provide input and receive output from the mobile device 104, including for example providing one or more input to initiate device activation. The user interface 204 may include a data output device (e.g., visual display, audio speakers) and one or more data input devices. The data input devices may include, but are not limited to, combinations of one or more of touch screens, physical buttons, cameras, fingerprint readers, keypads, keyboards, mouse devices, microphones, speech recognition packages, and any other suitable devices or other electronic/software selection methods. The one or more processors 206 may comprise a central processing unit and/or a dedicated controller such as a microcontroller.

The computer-readable memory 208 may be any computer-readable media which may store an operating system 210 and one or more applications 212. The operating system 210 and applications 212 may be comprised of software components. In general, a software component is a set of computer-executable instructions stored together as a discrete whole. Examples of software components include binary executables such as static libraries, dynamically linked libraries, and executable programs. Other examples of software components include interpreted executables that are executed on a run time such as servlets, applets, p-Code binaries, and Java binaries. Software components may run in kernel mode and/or user mode.

Computer-readable media includes at least computer storage media and communications media. Computer storage media includes volatile and non-volatile, removable and non-removable media implemented in any method or technology for storage of information such as computer readable instructions, data structures, program modules, or other data. Computer storage media includes, but is not limited to, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other non-transmission medium that can be used to store information for access by a computing device. Communication media may embody computer readable instructions, data structures, program modules, or other data in a modulated data signal, such as a carrier wave, or other transmission mechanisms. As defined herein, computer storage media does not include communication media.

The mobile device 104 may also include a rendering engine 213 and other device hardware 214. The rendering engine 213 may provide desirable "tuning" of the streaming content, for example by up-cycling the stream or downgrading image quality, to achieve or maintain a smoother user experience. The device hardware 214 may include other hardware that is typically located in a mobile telecommunication device. For example, the device hardware 214 may include signal converters, antennas, hardware decoders and encoders, graphic processors, a Universal Integrated Circuit Card (UICC) slot (e.g., SIM slot), I/O devices, and/or the like that enable the mobile device 104 to execute applications and provide telecommunication and data communication functions.

The mobile device 104 may have a wide range of means of information collection. Visual media capture may be in the form of one or more cameras capable of capturing still images and/or video. Audio media capture may be in the form of one or more microphones or transducers. Non-multimedia sensors include without limitation proximity sensors (an example of which may determine a proximity of the computing device 104 to a surface such as a user's head), GPS sensors, ambient light sensors, one or more accelerometers, a compass, one or more gyroscopes, and backlight illuminated sensors.

A server is any computing device that may participate in a network and host a service accessible by client computers 104. The network may be, without limitation, a local area network ("LAN"), a virtual private network ("VPN"), a cellular network, or the Internet. A server such as the EIT server 126 may be analogous to the mobile device 104 in many respects. Specifically, it may have one or more of a communication interface 202', a user interface 204', one or more processors 206', a computer-readable memory 208', an operating system 210', one or more applications 212', and device hardware 214'.

The multimedia services 130a and 130b may be hosted on a cloud network 216, here corresponding to the network(s) 118 illustrated in FIG. 1. The multimedia services 130a and 130b may provide the services of a multimedia server. Such a server may either be a physical dedicated server or a virtual machine. In the latter case, the cloud 216 may represent a plurality of disaggregated servers which provide virtual application server functionality and virtual storage/database functionality. The disaggregated servers that provide the multimedia services 130a and 130b may incorporate physical computer servers, which may have components, features, and variations that are substantially analogous to those described for the EIT server 126, with access to multimedia content stored in, e.g., multimedia data stores 132a and 132b.

Cloud services may be made accessible via an integrated cloud infrastructure 218. The cloud infrastructure 218 not only provides access to cloud services, but also to other services that may include but are not limited to billing services and other monetization services. The cloud infrastructure 218 may provide additional service abstractions such as Platform as a Service ("PaaS"), Infrastructure as a Service ("laaS"), and Software as a Service ("SaaS"), to name three.

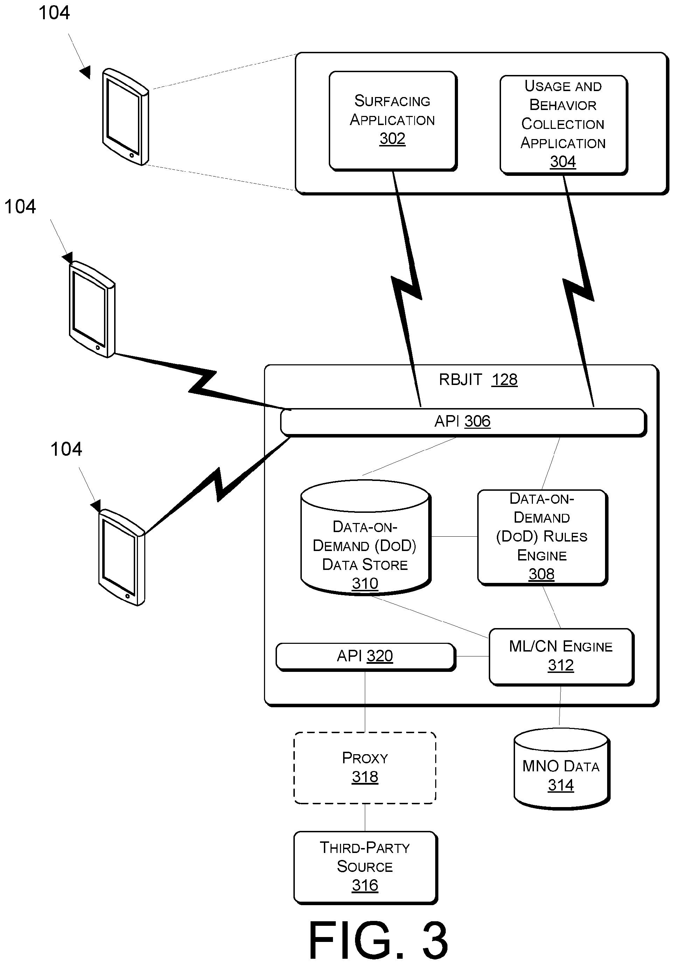

FIG. 3 illustrates an example of an architecture diagram in the context of a mobile platform for RBJIT multimedia content and for mobile application management. In the example shown in FIG. 3, the mobile device 104 collects usage and behavior information for the user 102 and provides the same for the MNO by way of the RBJIT 128. An opt-in policy may be employed to permit the individual user 102 to choose whether to allow their usage and behavior information to be collected. In some embodiments, the user 102 may be associated with various groups of users. For example, the user 102 may be part of a family plan associated with a unique identifier that may be provided by the MNO. In another example, the user 102 may be associated with one or more social network communities, also associated with a unique identifier. The RBJIT 128 also may superimpose its own groupings of users such as by a demographic and/or a geolocation of the users, in accordance with preestablished rules. In some embodiments, usage and behavior data of associated users may be aggregated by the RBJIT for analysis in addition to analysis of an individual user's information. Indeed, the fact of user devices 104 being used for voice conversations, social media chats, social media postings over mutual or related topics, etc. at given times can be leveraged to provide an additional basis for grouping by the RBJIT 128. In any of these cases, the collected usage and behavior information may be aggregated by user, by group, or by any desired parameter set up for measurement and/or analysis.

The applications 212 may include a surfacing application 302 and a usage and behavior collection application 304. The surfacing application 302 may provide multimedia content surfaced by the RBJIT 128 to the user interface 204 via the rendering engine 213 for a user 102 to view and to select for rendering via the user interface 204. The usage and behavior collection application 304 may operate to monitor selections by and content consumption preferences of the user 102 (optionally per user opt-in). This collection of content consumption information is called usage data. The multimedia content surfaced by the surfacing application 302 is determined by the RBJIT 128 based at least on the monitoring by the usage and behavior collection application 304. In some embodiments, the usage and behavior collection application 304 may be part of the surfacing application 302.

The usage and behavior collection application 304 may collect user activity information with respect to other applications 212 on the mobile device 104 (optionally per user opt-in). The usage and behavior collection application 304 may correlate that activity with multimedia content selections by the user 102 on the mobile device 104. These correlations are called behavior data. In this way, the usage and behavior collection application 304 may collect both usage and behavior data.

Content surfaced by the RBJIT 128 may be in the form of cards or tiles as the basic unit of the user experience. An individual card may comprise static content (such as an advertisement, offer, or call to action (e.g., to install or update software, purchase tickets within the app flow, or link to an MNO or other application where a transaction can be completed)), dynamic content (such as a movie trailer or program preview), or a combination of both static and dynamic content, together with metadata including but not limited to name, tagline, description, or URL. Content can be so-called first-party content sourced by the MNO (e.g., by way of example and without limitation limited-time marketing content such as product or service offers, group-related content, announcements, information on events local to the user, partner information and other relationships such as corporate sponsorships, and/or billing information such as due dates and payment options.) or from third-party sources

Content may be tagged for retrieval based on category, for example, and/or on other pieces of information such as keywords, parental control rating, etc., including information commonly used for tagging content. Cards may be presented in different orders at different times or for different users 102 as determined, at least in part, using artificial intelligence and the user's self-evolving profile. For example, the RBJIT 128 may process usage and behavior data for the user 102 or multiple users, including one or more groups of users that include the user 102.

The surfacing application 302 and the usage and behavior collection application 304 may both interface with the RBJIT 128 via an RBJIT application programming interface (API) 306, which supports multi-threading. The usage and behavior collection application 304 may collect usage and behavior data for the user 102 and send the same to the RBJIT 128 via the API 306, for example. The RBJIT 128 may send, to the surfacing application 302, surfacing content recommendations and multimedia content for precaching in a cache 220 on the mobile device 104. In some cases, the surfacing application 302 may notify the RBJIT 128 of preference and profile information, such as opt-in status, via the API 306.

The RBJIT 128 itself may comprise multiple software components. A data-on-demand (DoD) rules engine 308 reviews data stored in a data-on-demand (DoD) data store 310. The DoD data store 310 may contain both rules and the collected usage and behavioral data from the various users. A machine learning and/or cognitive network/cognitive computing (ML/CN) engine 312, in concert with the DoD rules engine 308, develops data models from the usage and behavior data in the DoD data store 310 to make predictions of content of interest for the user 102.

As mentioned, the mobile device 104 may have relatively fewer computing processing resources and less computer-readable memory than large-form-factor devices due to its size. Accordingly, caching strategies that might be used by a set-top box or personal computer may not be practical on the mobile device 104. Moreover, due to limited power and limited processing, content preprocessing strategies that might be used by a set-top box or personal computer may also not be practical on the mobile device 104.

Network bandwidth is another constraint. As the user 102 and the user's mobile device 104 move from one location to another, the network connection transfers from one antenna to another (e.g., from an antenna 110a to an antenna 110b). Accordingly, bandwidth is limited by what is available from antenna to antenna. For example, if the antenna 110a has a relatively low number of users and the antenna 110b is servicing a large number of users, then the second antenna 110b may have less bandwidth available and the user 102 may suffer inconsistent bandwidth as the user 102 changes from the first antenna 110a to the second antenna 110b. The result for a multimedia consumer is an inconsistent user experience.

In at least some embodiments, data models developed by the ML/CN engine 312 and the DoD rules engine 308 enforce limited payload response so as to only return data (multimedia content) which is required to be shown in the user interface 204. Multimedia content to be shown should be loaded only after the user 102 clicks/touches on a media tile or card. In some embodiments, multiple cards may be displayed via the user interface 204 in scrollable fashion, such as a scrollable column or list of cards bearing content and/or links to content. The list may be essentially "infinitely" scrollable (i.e., in the sense of a practically endless list of voluminous content or a loop of finite content). As such, only multimedia content (including cards) that can be shown on the user interface 204 should be downloaded to precache in such embodiments, with the rest of the list content being downloadable as the user 102 scrolls up or down (i.e., on demand).

The API 306 responds to requests for multimedia content by the user 102 via the mobile device 104 in accordance with constraints of the mobile device 104 and may thus return content in the appropriate media format and media resolution. Also, regarding the mobile device 104 constraints, the surfacing application 302 may continuously monitor battery usage, network speed, and connection quality, for example, such that requests for multimedia content, consistent with the continuously developed data, cause the API 306 to return the appropriate multimedia content as requested by the surfacing application 302.

Rules enforced by the DoD rules engine 308 generally support business purposes that influence and are carried out by the rules engine in the overall surfacing of content. Thus, for example, cards surfaced for offers and marketing campaigns may be time-limited, defined by start and end date/time. The number of customers and specific customers, customer segments, or customer groups who are presented or may redeem the offer may be set by rule. In some embodiments, the frequency of a campaign, or the frequency of offerings within a campaign, may be capped. These are but a few of countless options that may be set by rule and by which a card or cards are ultimately surfaced.

The ML/CN engine 312 is not limited to analyzing data stored in the DoD data store 310 and also may have access to MNO data 314 and data from one or more third-party sources 316. In some embodiments, data from a third-party source 316 may be accessed via a proxy 318. The proxy 318 provides security by isolating the third-party source 316 from the RBJIT 128. In some embodiments, the MNO may control the proxy 318, provide needed proxy information to the third-party source 316, and route traffic according to mappings that may be provided by the third-party service 316. In one or more embodiments, an API layer 320 may be built to provide right-fitting of content (e.g., bandwidth considerations) and/or a secure endpoint for access by the third-party source 316.

The MNO data 314 may include information such as billing information to determine what purchases have been made by the user 102, as well as identification of friends and family. For example, the MNO may maintain an MNO family group or billing group identifier. In some cases, the MNO identifier, such as T-Mobile US's T-Mobile ID^{™}, may track not only mobile devices 104 that have subscriber identification module (SIM) cards but also Wi-Fi-only devices. In some embodiments, a Wi-Fi-only device may also have a surfacing application 302 and a usage behavior and collection application 304 configured to interface with the RBJIT 128. In this way, more comprehensive usage and behavior information may be collected (subject to user opt-in, if applicable), thereby improving the quality of the user data in the DoD data store 310. The system may continually develop/implement an algorithm using machine learning techniques to apply the usage and behavior information to the multimedia content based on user engagements and additional input from customer data provided by MNO to improve, e.g., surfaced recommendations (supporting A/B testing related to both new and existing content in at least some embodiments). Recommendations are not limited to recommendations for individual content (e.g., a movie, a restaurant, etc.) but may include recommendations of multiple content mixes (dinner and a show, movies of a particular genre) to identify the most engaging content mix for an individual user 102 or specific user segments or user groups.

The MNO data 314 may also include demographic and profile information of various users 104. The MNO data 314 may be static, semi-static, or dynamic. In some embodiments, the user device 104 collects activity information on a substantively real-time basis. For example, the user device 104 may transmit geolocation information based on its GPS sensors. This geolocation data may be accessed as part of the MNO data 314. In this way, data from the user 102 may be aggregated with data of sets of users as defined by the ML/CN component 312 and the DoD rules engine 308 using this demographic and profile information. Many other types of MNO data 314 may be collected in real-time - content consumed, number of clicks on a particular tile or CTA, etc. may all have real-time value and be used to dynamically update data as needed. Additionally or alternatively, data may be collected and/or updated periodically or according to a schedule.

The RBJIT 128 may also receive usage and behavior data collected from one or more third-party sources. The third-party sources may include the one or more third-party sources 316 and therefore may include data from the multimedia services 132a and 132b generally accessible via their application programming interfaces. Data from third-party sources may include social network information via their respective application programming interfaces. In this way, usage and behavior data accessible from the third-party sources may supplement user data in the DoD data store 310, and data from a user 102 may be aggregated with sets of users as defined by the ML/CN component 312 and the DoD rules engine 308 using the third-party services and social network data.

With the ML/CN engine 312, the RBJIT 128 makes use of machine learning/cognitive network techniques to predict multimedia content that the user is likely to consume. In some embodiments, the DoD rules engine 308 makes predictions of multimedia content that may be of interest to the user 102. These predictions not only are used to surface content suggestions, but also to determine how much multimedia content (e.g., how much data) to download for precaching in the cache 220 (in full or in part) with high quality/high resolution/high fidelity data. In this way, if a user 102 selects a specific multimedia content file, the user 102 may readily experience on the mobile device 104 a high quality/high resolution/high fidelity version of the multimedia content from its cache 220. The size of the file precached may be determined based on one or more factors such as the speed to download the (un-precached) remainder of the multimedia content not yet received by the mobile device 104. Accordingly, as the user device 104 outputs the precached content, the rest of the content may be downloaded from the network and RBJIT 128.

The operation of the RBJIT 128 starts with the user 102 and the user device 104. The user device 104 may designate portions of the memory 208 as the cache 220 and a cache 221. In some embodiments, the cache 221 is a persistent cache. The caches 220 and/or 221 may be stored in a user partition. The persistent cache 221 stores the profile of a user and usage/behavior data collected by the usage and behavior collection application 304. The respective sizes of the caches 220 and 221 are optional and should be managed to meet objectives for battery usage optimization and memory optimization considering network performance. As data gathering by the usage and behavior collection application 304 is real-time, the persistent cache 221 need not be flushed frequently; for example, flushing the persistent cache 221 approximately ever two days may be sufficient for most implementations. File size limitation likewise is optional with 5mb at run time being a useful guide. Caching policy may be set by the user 102.

Because cache is limited, in some embodiments precaching may be restricted to multimedia content indicated by an algorithm, refined or turned by the ML/CN engine 312 according to real-time usage and behavior data collected from the mobile device 104 as well as a user profile, to be likely to be requested, ordered, downloaded, etc. by the user 102. With this in mind, advertisements need not be precached, for example.

The profile of the user may include opt-in preferences. The profile may also include user preferences regarding multimedia content and user preferences specific to a multimedia service 130a and 130b. Furthermore, the user profile may store identifications of social networks of which the user 102 is a member and opt-ins for the MNO to access this information. These preferences and identifiers provide additional data and hints about the user that may be used by the ML/CN engine 312 in the just-in-time surfacing of multimedia content.

In some embodiments, the user profile may be edited via application settings of the surfacing application 302 or another application. Whenever the user profile is established or updated, the contents of the persistent cache 221 are also updated, and the user profile is sent to the RBJIT 128 via the API 306 and stored in the DoD data store 310.

In some embodiments, the surfacing application 302 defines a set of software triggers corresponding to various user events. User events may include, without limitation, selection of multimedia content, previewing multimedia content, and viewing a page with multimedia content. The user events may also include stopping and pausing playback of multimedia content. The usage and behavior data are processed by the collection application 304 and stored in the persistent cache 221. For example, the collection application 304 may detect that a user 102 selected a specific multimedia content (file) but stopped playing the file after five minutes and never returned to the file. The usage and behavior collection application 304 may either store the collection of events in the persistent cache 221 or process these events as an indication of that the user 102 is not interested in the file.

In some embodiments, the operating system 210 of the mobile device 104 enables the enlistment of events exposed by other applications 212 as well as events of the operating system 210 itself. Upon detecting an event published by the surfacing application 302, the usage and behavior collection application 304 may also collect events of other applications 212 within a predetermined amount of time of detecting the surfacing application event. The usage and behavior collection application 304 may then associate those events and the sources of those events with the surface application event and store the association in the persistent cache 221. In turn, the ML/CN software component 312 provided with this information may use it to detect behavioral data associated with the surface application event. In this way, the information feeds the determination of content that should be precached and content that should not be precached, increasing the likelihood that content in the precache will be demanded by the user 102 and consequently enhancing the user experience.

The usage and behavior collection application 304 may collect events of other applications 212 and push the same to the RBJIT 128 on demand. Alternatively or additionally, the RBJIT 128 may instruct the usage and behavior collection application 304 to send behavioral data as part of a user request, or from time to time, to improve the ability of the RBJIT 128 to predict what multimedia content is likely to be consumed if surfaced on demand, on the basis of behavior patterns.

In general, the usage and behavior collection application 304 may either push the contents of the persistent cache 221 to the DoD data store 310 either in response to an event on the mobile device 104, or the RBJIT 128 may affirmatively pull the data on demand. An example of the usage and behavior collection application 304 pushing the data in the persistent cache 221 may be to update the DoD data store 310 from time to time. An example of the RBJIT 128 affirmatively pulling data from the usage and behavior collection application 304 is in determining content to precache on the mobile device 104.

The DoD data store 314 may contain information not only about the user 102, but also about other users in some embodiments. The ML/CN engine 312 may aggregate the user data either individually to the user, by a group with which the user 102 is affiliated, or with all users. The group with which the user 102 is affiliated may be static or semi-static (such as by family, billing group, or social network community). In some embodiments, the group with which the user 102 is affiliated may be dynamic, such as a social network community defined by social network community attributes as provided by the third-party (social network data) source 316, or by demographic or geolocation attributes as provided by the MNO data 314.

From time to time, the ML/CN engine 312 may develop one or more data models based on data of the user 102 or one or more user groups. These ML/CN data models comprise adaptive rules for determining multimedia content for surfacing.

Telemetry from the usage and behavior collection application 304 about a current state of the user device 104 is received by the RBJIT 128 and stored in the DoD data store 310 and made available to the DoD rules engine 308. The DoD rules engine 308 also has access to MNO data 314, such as geolocation or other user device data. In addition to forming groups based on geolocation, as mentioned elsewhere in this description, user (device) geolocation enables location-based content to be preferentially surfaced where location-based content is available (i.e., the ability to book tickets at a nearby movie theater or recommendation for a nearby restaurant). The telemetry could also be a usage event with respect to content surfaced by the surfacing application 302, or behavior data transmitted by the usage and behavior collection application 304 from the persistent cache 221. Telemetry measurements may, in some embodiments, be by a unique tracking identifier to measure user engagement with content (e.g., user selections of content and time on content) and/or other content consumption metrics (supporting A/B testing related to both new and existing content in at least some embodiments), useful for tailoring recommendations and developing/following precaching policy as well as to meet content licensing and financial settlements, for example. Based on this telemetry, the DoD rules engine 308 inputs this data into the one or more ML/CN models which in turn generate a presentation (e.g., in a list) of multimedia content predicted to be of interest to the user 102.

Telemetry may be used to provide reports based on collection data collected by the user behavior and collection application 304. Reporting may be geared to evaluating aspects such as, and without limitation, the effectiveness of the user experience (e.g., do conditions cause an advertisement presented at content startup to load so slowly as to induce the user to move on without waiting for the content), the effectiveness of the content, the value of the service, and monetization metrics, including fill rate, click-through rate, CPM, eCPM, and/or so forth. The user behavior and collection application 304 may provide raw data feeds, click logs, content load time, buffering status, and other user information. Based at least on such information, the reporting engine may provide reports that include but are not limited to user engagements, number of sessions, active views, number of offers, user interactions with a service, various click-related metrics, actions within app, revenue-related metrics, reporting per channel, reporting per offer type, reporting per specific offer, and reporting per action recommended.

The DoD rules engine 308 may then output, to the API 306 for surfacing by the surfacing application 302, one or more of the predicted multimedia content along with statistical measures of confidence. The statistical measures of confidence may be based on user/customer data as mentioned elsewhere herein received from the usage and behavior collection application 304, as well as system data and/or network conditions (e.g., system load times, file size, buffering, bandwidth, and so forth, which may also take into account the kind of content and its buffering requirements) received from the third-party source 316, the data being delivered to the ML/CN engine 312, which may generate the statistical measures, although one or more other components may be provided and implemented alternatively or in combination to this end. The surfaced multimedia content files may be ranked by the ML/CN engine 312 and selected by the surfacing application 302 based on those statistical measures of confidence.

The surfacing process performed by the surfacing application 302 may include one or more of presenting the files comprising the multimedia content to surface (recommended based on the statistical measures of confidence and/or ranking), thumbprints of the files, metadata of the files, and at least a portion of the multimedia content itself. The multimedia content to be surfaced is then affirmatively pushed to the mobile device 104. In this way, the mobile device 104 may surface multimedia content on demand with limited perceivable lag to the user 102 at the quality/resolution/fidelity demanded by the user 102.

The RBJIT 128 enables various use cases. For example, different users 102 may have different degrees of opting in, such as a user 102 who does not opt in to share usage and behavior data but may still opt to share demographic data. The RBJIT 128 may then associate that user 102 with other users in one or more groups. In some embodiments, the RBJIT 128 may surface multimedia content based on the usage and behavior of other users in that user's social network community, family group, or billing group, to name three examples. In some instances, the ML/CN data models impose a threshold condition according to which the likelihood of a user 102 consuming particular multimedia content is quantified and must meet or exceed a threshold that may be set by the user 102, predetermined by the RBJIT 128, or the result of learning from analysis of the usage and behavior data, or other data, by the DoD rules engine 308 and thus dynamic. In this way, a non-opt-in user may still benefit from this aspect of the RBJIT 128 operation.

Typically, as more and more data are collected, the more the ML/CN data models improve, and the more the accuracy of the RBJIT 128 predictions improves. In some embodiments, over time, the surfacing application 302 may generate new hints and store the same in the persistent cache 221 of the mobile device 104 instead of constantly recalculating predictions. When the persistent cache 221 is updated in this way, these generated new hints will in turn modify the ML/CN data models in accordance with known principles as modified to suit the novel operations disclosed herein. These hints may be edited in accordance with the surfacing application 302 settings. For example, in some embodiments, autogenerated hints may be suppressed, labeled, or edited by the user 102.

To illustrate, consider a scenario in which the RBJIT 128 detects from data received from the usage and behavior collection application 304 that every Sunday night, an NFL football game that was played earlier in the day is watched on the user device 104. Implementing an algorithm, the RBJIT 128 may calculate, based on the received data, the MNO data 314, and/or the data from the third-party source 316, that there is a 95% chance of the game being watched and on the basis of 90% being above a predetermined threshold set in accordance with the description herein, may generate a hint to proactively download the NFL game. The hint may be autogenerated at the same time for each instance or at a time chosen by the user 102. The surfacing application 302 may receive a notification that the RBJIT 128 suggests the hint and upon acceptance by the user 102, adds the hint to the persistent cache 221, which in turn updates the RBJIT 128 and the ML/CN data models.

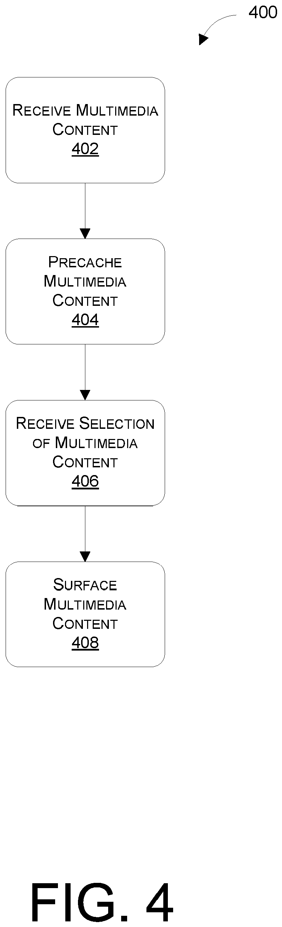

FIGS. 4-6 present illustrative processes for implementing mobile device rules-based just-in-time servicing. The processes are illustrated respectively as a collection of blocks in logical flow charts, which represent sequences of operations that can be implemented in hardware, software, or a combination thereof. In the context of software, the blocks represent computer-executable instructions that, when executed by one or more processors, perform the recited operations. Generally, computer-executable instructions may include routines, programs, objects, components, data structures, and the like that perform particular functions or implement particular abstract data types. The order in which the operations are described is not intended to be construed as a limitation, and any number of the described blocks can be combined in any order and/or in parallel to implement the process. For discussion purposes, the processes are described with reference to the network architecture 100 of FIG. 1.

FIG. 4 is a flow diagram of an example process 400 performed at least in part by the mobile device 104 for surfacing multimedia content. At Block 402, the mobile device 104 receives multimedia content from the RBJIT 128. Multimedia content may be provided by the MNO or by third-party sources and may be static or dynamic. The multimedia content may include, without limitation, short form video content, linear TV content, movie trailers, music videos, news articles, news clips, photo gallery carousels, app recommendations, offers, or direct commerce.

At Block 404, the mobile device 104 precaches the multimedia content received in Block 402 in the cache 220. The cache 220 is sized to store an amount of multimedia content that may be presented via the user interface 204 on demand by the user, for example in scrollable fashion, such as a scrollable column or list of cards bearing content and/or links to content. Start and end dates/times in the cache 220 may be established for the multimedia content to allow windowing of events (e.g., offers, movie trailers, etc.) and auto-removal from the cache 220 once expired.

At Block 406, the mobile device 104 receives, for example via the user interface 204, a selection by the user 102 that enable certain actions including the presentation of multimedia content on the user interface 104. Such multimedia content may be present at least in part in the cache 220 for ready and speedy retrieval and presentation.

At Block 408, the mobile device 104 surfaces the multimedia content via the user interface 204. The multimedia content is surfaced by the surfacing application 302 from the cache 220 in portions sufficient to maintain a high-quality user experience due to the relative speed of caching technology and policy, as well as the proximity of the cache 220 (i.e., being in the mobile device 104 itself).

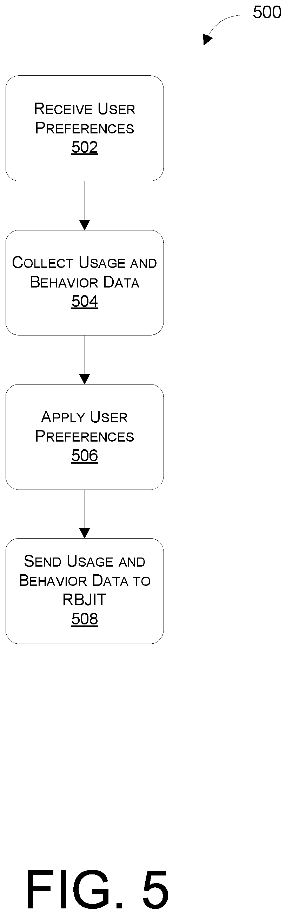

FIG. 5 is a flow diagram of an example process 500 performed at least in part by the mobile device 104 for collecting usage and behavior data of the user 102. At Block 502, the mobile device 104 receives user preferences from the user 102, for example via user input to the user interface 204. The user preferences may include, without limitation, how much content to cache in the persistent cache 221, how long for the content to be cached, whether the user opts to allow collection of certain information (or of all information) related to usage and behavior while using the mobile device 104, selection and content consumption history, identifications of social networks of which the user 102 is a member, and/or so forth. In some embodiments, the user preferences manage what data may or may not be collected by the usage and behavior application 304 or manage what data the usage and behavior application 304 may provide to the RBJIT 128. In some embodiments, the preferences may be set individually for different applications (e.g., one application may be permitted to collect location information while another application may not). Some settings may be set by the user as preferences for some applications but not for all (e.g., the user may be able to deny permission for one application to access contacts whereas but unable to deny the same permission to another application).

At Block 504, the usage and behavior collection application 304 collects usage and behavior data of the user 102 under control of the one or more processors 206. The usage and behavior data may be collected on a real-time basis and may include, without limitation, demographic and profile information (static, semi-static, or dynamic) such as geolocation information, content consumed, number of clicks on a particular tile or CTA, and other activity information. In addition to collecting new data, the usage and behavior collection application 304 may collect dynamically updated data. Additionally or alternatively, data may be collected and/or updated periodically or according to a schedule.

At Block 506, the mobile device 104 may apply the user preferences to manage the information collected by the usage and behavior collection application 304 and/or provided to the RBJIT 128 by the usage and behavior collection application 304. The user preferences may be applied by the usage and behavior collection application 304 or by separate hardware or software within the mobile device 104, under control of the one or more processors 206.

At Block 508, the mobile device 104 may send the usage and behavior data to the RBJIT 128. The usage and behavior data may be sent by the usage and behavior collection application 128 or by another application under the control of the one or more processors 206.

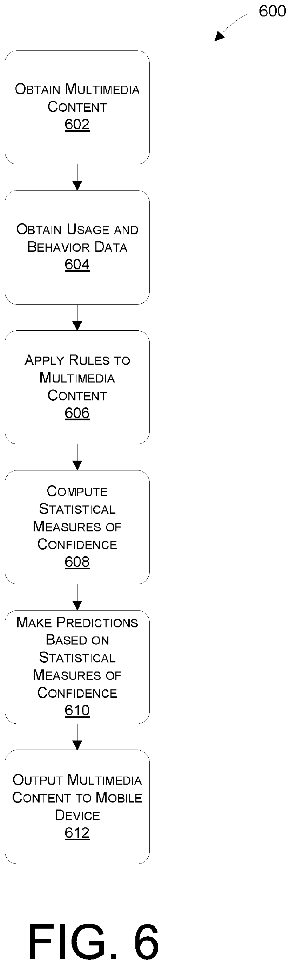

FIG. 6 is a flow diagram of an example process 600 performed at least in part by the RBJIT 128 for determining multimedia content for sending to the mobile device 104. At Block 602, the RBJIT 128 may obtain multimedia content from the data-on-demand data store 310 or from the one or more third-party sources 316 in response to a request received from the mobile device 104 (e.g., from the surfacing application 302). Multimedia content obtained from the one or more third-party sources 316 may be obtained via the proxy 318.

At Block 604, the RBJIT 128 obtains usage and behavior data from the mobile device 104 (e.g., from the usage and behavior collection application 304). The usage and behavior data may be obtained in whole or in part in real time. Usage and behavior data may be obtained from the one or more third-party sources 316 as well. The usage and behavior data may be data of the user 102 or, additionally or alternatively, from multiple users of one or more groups of users to which the user 102 belongs. Additionally or alternatively, usage and behavior data, such as the usage and behavior data obtained from the one or more third-party sources 316, may be data of multiple users to be considered in addition to the data of the user 102.

At Block 606, the RBJIT 128 applies rules to the multimedia content for computing statistical measures of confidence that the user 102 will be interested in the content if surfaced to the mobile device 104. The rules are obtained from the DoD rules engine 308, for example, applied according to an algorithm. The ML/CN engine 312 may apply machine learning to results of prior content consumption by the user 102 or multiple users as outlined elsewhere herein to refine the rules to be applied by the DoD rules engine 308.

At Block 608, the RBJIT 128 computes statistical measures of confidence that the multimedia content considered for surfacing will be of interest to the user 102. The statistical measures of confidence may be based on user/customer data as well as system data and/or network conditions as described herein, the data being delivered to the ML/CN engine 312, which may generate the statistical measures, although one or more other components may be provided and implemented alternatively or in combination to this end..

At Block 610, the RBJIT 128 makes predictions based on the statistical measures of confidence computed at Block 608. In some embodiments, the DoD rules engine 308 makes use of machine learning/cognitive network techniques of the ML/CN engine 312 to predict multimedia content that the user is likely to consume. These predictions may also be used to determine how much multimedia content (e.g., how much data) to download for precaching in the cache 220.

At Block 612, the RBJIT 128 outputs multimedia content to the mobile device 104. In some embodiments, the mobile device 104 may pull the multimedia content and/or the RBJIT 128 may push the content. In some embodiments, the multimedia content is output before being requested by the user 102, in portions set for the size of the cache 220 so that the user 102 may be presented with the multimedia content on demand from the cache 220 when requested. How much to precache in this way, as well as the content itself, is determined using the techniques described herein.

The usage and behavioral data may be sensitive. In some embodiments, access to the usage and behavioral data is controlled in accordance with permissions. Additionally, the surfacing application 302 and the usage and behavior collection application 304 manage flow of data, including that of large multimedia content files. Accordingly, the MNO may have management and versioning challenges, as well as network bandwidth management challenges.

In light of these challenges, the surfacing application 302 has the ability in some embodiments to manage downloads of multimedia content files recommended by the RBJIT 128. Multimedia content downloads are potentially quite large. Since the RBJIT 128 exercises aspects of a server, the RBJIT 128 may respond to download requests from the surfacing application 302. From time to time, the RBJIT 128 may not be able to respond to the surfacing application 302, for example due to a high volume of requests. In general, applications that do not receive a response from a server may poll the server again. For the RBJIT 128, however, this is counterproductive. Therefore, in some embodiments, the surfacing application 302 and the usage and behavior collection application 304 may be configured not to re-poll the RBJIT 128 for a predetermined amount of time that may be set to increase with each failed connectivity attempt in some embodiments. This technique is called "retry and backoff" since the surfacing application 302 and the usage and behavior collection application 304 are backing off from contacting the RBJIT 128 with each failed retry. To the extent that the surfacing application 302 is able to either precache or download the multimedia content, the user 102 will not see a degradation in the quality of viewed multimedia content. In this way, the RBJIT 128 is protected from being overwhelmed by retry requests.

In some embodiments, the surfacing application 302 may perform smart downloads. For example, the ML/CN engine 312 may track software events, including tracking attempted downloads of multimedia content, and at what times. The ML/CN engine 312 may also track reasons for failure, such as network congestion or resource contention of the files on the server side. The ML/CN engine 312 may then create or adjust one or more ML/CN data models to predict the best times to download files and minimize the number of failed downloads and subsequent retry and backoff attempts. In this way, while retry and backoff protect the RBJIT 128, the number of backoffs may be minimized.

As previously mentioned, the surfacing application 302 and the collector application 304 may collect information on a user opt-in basis. Furthermore, the RBJIT 128 may access one or both MNO data 314 and third-party source 316 data. The user may use the setting options for the surfacing application 302 or another application to perform per-field access control. For example, when an application 212 is installed, the RBJIT 128 may be notified. Field definitions associated with the installed application may be retrieved by a side lookup table. Those fields may be then served by the RBJIT 128 to the surfacing application 302 and the usage and behavior collection application 304 to allow the enumeration of configurable fields. In this way, the user 102 may be provided with access to data fields accessible by the RBJIT 128 platform, both on the mobile device 104 and on the RBJIT 128, and an MNO user profile where individual access rights (read/write) may be set.

To aid configuration, there may be either predetermined or user-defined groupings for fields where sets of fields may be set in bulk. The groupings may be labeled for ease of use. For example, all fields for applications 212 other than the surfacing application 302 may be labeled "Behavioral Fields" and may all be set to readable or not-readable with a single gesture all at once.

For fields of data that are subject to regulation, the RBJIT 128 will store in the DoD data store 310 identities of those fields such that the mobile device surfacing application 302 and usage and behavior application 304 will be configured to prevent changing access rights to those fields. For example, social security and credit card information may be locked to unreadable to prevent accidental exposure of those regulated fields.

From time to time, the surfacing application 302 and the usage and behavior application 304 may have security updates. These applications may have updates deployed in sync with corresponding updates to the server side RBJIT 128. Also, the surfacing application 302 and the usage and behavior application 304 may be deprecated. To limit the operation of these applications after deprecation, an application kill switch may be employed.

In orderto perform in sync updates, the MNO may employ a remote forced update technique. Specifically, the surfacing application 302, the usage and behavior collection application 304, and the RBJIT 128 (and constituent software components) have a versioning file. Upon revising the RBJIT platform and applications, the updated surfacing application 302 and collection application 304 are staged. The RBJIT 128 may then transmit a notification to the mobile device 104 (e.g., via a user interface module, to a view of an application that serves multimedia content, or via any mode that may be preset or selected by the user 102) to disable user input to the surfacing application 302 and the usage and behavior collection application 304, and then force a download and update of the surfacing application 302 and the usage and behavior collection application 304 from the staging location. At the mobile client 104, the feature may be integrated with the mobile API to request the API 306 for the latest application version and compare the same with the current or currently installed version on the mobile device 104. The user interface module of the mobile device 104 may have a forced update pop-up, for example in the form of a call to action button, to obtain the updated application from a store such as the Google Play Store^{™}. In some embodiments, the application may prevent the user 102 from using the surfacing application 302 or the usage and behavior collection application 304 as the case may be, until the latest version of the application is installed. In some embodiments, the surfacing application 302 and/or the usage and behavior collection application 304 may check for a forced update upon application launch and/or upon going from background to foreground.

The surfacing application 302 and the usage and behavior collection application 304, alternatively or additionally, may be pulled from installation, i.e., uninstalled. The old surfacing application 302 and usage and behavior collection application 304 as currently installed on the mobile device 104 may receive a notification from the RBJIT 128 with the new version. A comparison of the application versions may then trigger a forced update from the staging locations.

Over time, applications become deprecated. The RBJIT 128 may also have a so-called "kill switch" function. Specifically, the MNO may send a software notification to one or more user devices 104. A user device 104 receiving the notification displays a message to the user 102 informing of the deprecation of the surfacing application 302 and/or the usage and behavior collection application 304. The message may be a modal message. Upon acknowledgment, the mobile device 104 may then uninstall the applications. In this way, the RBJIT 128 may be shut down by the MNO without the risk that users 102 may try to access the RBJIT 128 after shut-down.

In accordance with one or more embodiments described herein, techniques are provided to implement rules-based just-in-time (RBJIT) multimedia content streaming in a data-on-demand solution to overcome constraints to which mobile devices are particularly vulnerable for multimedia streaming, although the techniques, in whole or in part, may be applicable as well to some stationary user devices, and potentially even those having large form factors. In some embodiments, an RBJIT engine ("RBJIT") may collect from the mobile device information about a user, any groups that the user is associated with, and/or the set of all users in general. The RBJIT may preferentially select for user display ("surfacing") by the mobile device multimedia content and content suggestions based on this information, limiting payload response to surface only multimedia content which is required or requested to be shown in the user interface, with the greater likelihood that the surfaced multimedia content will be of interest to a user being substantially increased. In this way, among other improvements, browsing time for a user on a mobile device with a limited form factor is reduced, and network bandwidth is conserved by not surfacing multimedia content that the user ultimately will not view. Furthermore, as the RBJIT collects an increasingly large amount of information, predictions of user interest in multimedia content will continue to improve.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. A method, comprising:
receiving user preferences with respect to collecting usage data and behavior data of a user (102) using a mobile device (104);
collecting usage data of the user using the mobile device, including collecting information of user preferences related to consumption of multimedia content using the mobile device;
collecting behavior data of the user, including collecting user activity information of interactions of the user with applications (212) on the mobile device and correlating at least part of the user activity information with one or more selections of multimedia content via the mobile device;
storing the usage data and behavior data on the mobile device;
periodically sending the stored usage data and behavior data from the mobile device;
monitoring at least one constraint of the mobile device, wherein the at least one constraint of the mobile device comprises at least one of battery usage, network speed or connection quality;
requesting, by the mobile device, multimedia content based on the monitored at least one constraint;
receiving multimedia content to precache on the mobile device for rendering via the mobile device based on the usage data and behavior data and based on the request; and
presenting the multimedia content from the precache.

2. The method of claim 1, wherein a size of the multimedia content to precache on the mobile device is determined based on one or more factors, wherein the one or more factors comprise a speed to download a remainder of the multimedia content not yet received by the mobile device.

3. The method of claim 1, wherein receiving multimedia content to precache on the mobile device comprises receiving only multimedia content which is required for a media tile or card to be presented by the mobile device.

4. The method of claim 1, wherein collecting usage data of the user using the mobile device comprises collecting information of user preferences related to consumption of multimedia content using a surfacing application (302) of the mobile device; and
the behavior data is collected based upon detecting an event published by the surfacing application.

5. The method of claim 1, wherein the usage data and behavior data are data of the user, of one or more groups with which the user is associated, or of a set of users regardless of the user.

6. The method of claim 1, further comprising:
monitoring selections by and content consumption preferences of the user on the mobile device.

7. The method of claim 1, further comprising:
applying the user preferences to the usage data and the behavior data; and
managing the sending of the usage data and the behavior data in accordance with the applied user preferences.

8. The method of claim 1, further comprising:
selecting the precached multimedia content for presenting.

9. A mobile device, comprising:
one or more processors (206);
a user interface (204); and
memory (208) in which are stored computer-executable instructions that, if executed by the one or more processors, cause the one or more processors to perform operations comprising:
receiving user preferences with respect to collecting usage data and behavior data of a user using a mobile device;
collecting usage data of the user using the mobile device, including collecting information of user preferences related to consumption of multimedia content using the mobile device;
collecting behavior data of the user, including collecting user activity information of interactions of the user with applications on the mobile device and correlating at least part of the user activity information with one or more selections of multimedia content via the mobile device;
storing the usage data and behavior data on the mobile device;
periodically sending the stored usage data and behavior data from the mobile device;
monitoring at least one constraint of the mobile device, wherein the at least one constraint of the mobile device comprises at least one of battery usage, network speed or connection quality;
requesting multimedia content based on the monitored at least one constraint;
receiving multimedia content to precache on the mobile device for rendering via the mobile device based on the usage data and behavior data and based on the request; and
presenting the multimedia content from the precache.

10. The mobile device of claim 9, wherein the memory includes:
a surfacing application (302) configured to render the multimedia content via a user interface on the mobile device for the user to view the multimedia content and to select the multimedia content for rendering, and
a usage and behavior collection application (304) configured to monitor the multimedia content selection and multimedia content consumption preferences of the user,
wherein the surfacing application and the usage and behavior collection application are respectively configured to interface with a server-side application programming interface (306).

11. The mobile device of claim 9, wherein the usage data and behavior data are data of the user, of one or more groups with which the user is associated, or of a set of users regardless of the user.

12. The mobile device of claim 9, wherein the operations further comprise:
monitoring selections by and content consumption preferences of the user on the mobile device.

13. The mobile device of claim 9, wherein the operations further comprise:
applying the user preferences to the usage data and the behavior data; and
managing the sending of the usage data and the behavior data in accordance with the applied user preferences.

14. A non-transitory computer-readable medium storing instructions that, if executed by one or more processors, cause the one or more processors to perform operations comprising:
receiving user preferences with respect to collecting usage data and behavior data of a user using a mobile device;
collecting usage data of the user using the mobile device, including collecting information of user preferences related to consumption of multimedia content using the mobile device;
collecting behavior data of the user, including collecting user activity information of interactions of the user with applications on the mobile device and correlating at least part of the user activity information with one or more selections of multimedia content via the mobile device;
storing the usage data and behavior data on the mobile device;
periodically sending the stored usage data and behavior data from the mobile device;
monitoring at least one constraint of the mobile device, wherein the at least one constraint of the mobile device comprises at least one of battery usage, network speed or connection quality;
requesting, by the mobile device, multimedia content based on the monitored at least one constraint;
receiving multimedia content to precache on the mobile device for rendering via the mobile device based on the usage data and behavior data and based on the request; and
presenting the multimedia content from the precache.

## Patentansprüche

1. Verfahren umfassend:
Empfangen von Nutzerpräferenzen in Bezug auf das Sammeln von Nutzungsdaten und Verhaltensdaten eines Benutzers (102) bei Nutzung eines mobilen Geräts;
Sammeln von Nutzungsdaten des Benutzers bei Nutzung eines mobilen Geräts, einschließlich des Sammelns von Informationen über Nutzerpräferenzen in Bezug auf den Konsum von Multimedia-Inhalten bei Nutzung des mobilen Geräts;
Sammeln von Verhaltensdaten des Benutzers, einschließlich des Sammelns von Benutzeraktivitätsinformationen von Interaktionen des Benutzers mit Anwendungen (212) auf dem mobilen Gerät und Korrelieren zumindest eines Teils der Benutzeraktivitätsinformationen mit einer oder mehreren Auswahlen von Multimediainhalten über das mobile Gerät;
Speichern der Nutzungsdaten und Verhaltensdaten auf dem mobilen Gerät;
periodisches Senden der gespeicherten Nutzungsdaten und Verhaltensdaten von dem mobilen Gerät;
Überwachen mindestens einer Beschränkung des mobilen Geräts, wobei die mindestens eine Beschränkung des mobilen Geräts mindestens eines von Batterieverbrauch, Netzwerkgeschwindigkeit oder Verbindungsqualität umfasst;
Anfordern von Multimediainhalten durch das mobile Gerät basierend auf der mindestens einen überwachten Beschränkung;
Empfangen von Multimediainhalten, die auf dem mobilen Gerät zwischengespeichert werden sollen, um sie über das mobile Gerät auf der Grundlage der Nutzungsdaten und der Verhaltensdaten sowie auf der Grundlage der Anforderung wiederzugeben; und
Präsentieren des Multimediainhalts aus dem Zwischenspeicher.

2. Verfahren nach Anspruch 1, wobei die Größe des auf dem mobilen Gerät zwischenzuspeichernden Multimediainhalts auf der Grundlage eines oder mehrerer Faktoren bestimmt wird, wobei der eine oder die mehreren Faktoren eine Geschwindigkeit zum Herunterladen eines Rests des noch nicht vom mobilen Gerät empfangenen Multimediainhalts umfassen.

3. Verfahren nach Anspruch 1, wobei das Empfangen von Multimediainhalten, die auf dem mobilen Gerät zwischengespeichert werden sollen, nur das Empfangen von Multimediainhalten umfasst, die für eine Medienkachel oder -karte erforderlich sind, die von dem mobilen Gerät präsentiert werden soll.

4. Verfahren nach Anspruch 1, wobei das Sammeln von Nutzungsdaten des Benutzers bei Nutzung des mobilen Geräts das Sammeln von Informationen über Nutzerpräferenzen in Bezug auf den Konsum von Multimediainhalten bei Nutzung einer Oberflächenanwendung (302) des mobilen Geräts umfasst; und
die Verhaltensdaten auf der Grundlage des Erfassens eines Ereignisses gesammelt werden, das durch die Oberflächenanwendung veröffentlicht wird.

5. Verfahren nach Anspruch 1, wobei es sich bei den Nutzungsdaten und Verhaltensdaten um Daten des Nutzers, einer oder mehrerer Gruppen, mit denen der Nutzer assoziiert ist, oder einer Gruppe von Nutzern unabhängig vom Nutzer handelt.

6. Verfahren nach Anspruch 1 ferner umfassend:
der Auswahlen durch den Benutzer und der Präferenzen des Inhaltskonsums des Benutzers auf dem mobilen Gerät.

7. Verfahren nach Anspruch 1 ferner umfassend:
Anwenden der Nutzerpräferenzen auf die Nutzungsdaten und die Verhaltensdaten; und Verwalten des Sendens der Nutzungsdaten und der Verhaltensdaten in Übereinstimmung mit den angewandten Nutzerpräferenzen.

8. Verfahren nach Anspruch 1 ferner umfassend: Auswahl des zwischengespeicherten Multimediainhalts zur Präsentation.

9. Mobiles Gerät umfassend:
einen oder mehrere Prozessoren (206);
eine Benutzerschnittstelle (204); und
Speicher (208), in dem computerausführbare Anweisungen gespeichert sind, die, wenn sie von dem einen oder den mehreren Prozessoren ausgeführt werden, den einen oder die mehreren Prozessoren veranlassen, Operationen durchzuführen, die umfassen:
Empfangen von Nutzerpräferenzen in Bezug auf das Sammeln von Nutzungsdaten und Verhaltensdaten eines Nutzers bei Nutzung eines mobilen Geräts;
Sammeln von Nutzungsdaten des Benutzers bei Nutzung des mobilen Geräts einschließlich des Sammelns von Informationen über Nutzerpräferenzen in Bezug auf den Konsum von Multimedia-Inhalten bei Nutzung des mobilen Geräts;
Sammeln von Verhaltensdaten des Benutzers, einschließlich des Sammelns von Benutzeraktivitätsinformationen von Interaktionen des Benutzers mit Anwendungen auf dem mobilen Gerät und Korrelieren mindestens eines Teils der Benutzeraktivitätsinformationen mit einer oder mehreren Auswahlen von Multimediainhalten über das mobile Gerät;
Speichern der Nutzungsdaten und Verhaltensdaten auf dem mobilen Gerät;
periodisches Senden der gespeicherten Nutzungsdaten und Verhaltensdaten von dem mobilen Gerät;
Überwachen mindestens einer Beschränkung des mobilen Geräts, wobei die mindestens eine Beschränkung des mobilen Geräts mindestens eines von Batterieverbrauch, Netzwerkgeschwindigkeit oder Verbindungsqualität umfasst;
Anfordern von Multimediainhalten basierend auf der mindestens einen überwachten Beschränkung;
Empfangen von Multimediainhalten, die auf dem mobilen Gerät zwischengespeichert werden sollen, um sie über das mobile Gerät auf der Grundlage der Nutzungsdaten und der Verhaltensdaten sowie auf der Grundlage der Anforderung wiederzugeben; und
Präsentieren des Multimediainhalts aus dem Zwischenspeicher.

10. Mobiles Gerät nach Anspruch 9, wobei der Speicher umfasst:
eine Oberflächenanwendung (302), die konfiguriert ist, den Multimediainhalt über eine Benutzerschnittstelle auf dem mobilen Gerät für den Benutzer zum Betrachten des Multimediainhalts und zum Auswählen des Multimediainhalts für die Wiedergabe wiederzugeben, und
eine Nutzungs- und Verhaltenssammelanwendung (304), die konfiguriert ist, die Multimedia-Inhaltsauswahl und die Multimedia-Inhaltskonsumpräferenzen des Benutzers zu überwachen,
wobei die Oberflächenanwendung und die Nutzungs- und Verhaltenssammelanwendung jeweils konfiguriert sind, eine Schnittstelle zu einer serverseitigen Anwendungsprogrammierschnittstelle (306) zu bilden.

11. Mobiles Gerät nach Anspruch 9, wobei es sich bei den Nutzungsdaten und Verhaltensdaten um Daten des Nutzers, einer oder mehrerer Gruppen, mit denen der Nutzer assoziiert ist, oder einer Gruppe von Nutzern unabhängig vom Nutzer handelt.

12. Mobiles Gerät nach Anspruch 9, wobei die Vorgänge ferner Folgendes umfassen: Überwachen der Auswahlen durch den Benutzer und der Präferenzen des Inhaltskonsums des Benutzers auf dem mobilen Gerät.

13. Mobiles Gerät nach Anspruch 9, wobei die Vorgänge ferner umfassen: Anwenden der Nutzerpräferenzen auf die Nutzungsdaten und die Verhaltensdaten; und Verwalten des Sendens der Nutzungsdaten und der Verhaltensdaten in Übereinstimmung mit den angewandten Nutzerpräferenzen.

14. Nicht-transitorisches computerlesbares Medium, das Anweisungen speichert, die, wenn sie von einem oder mehreren Prozessoren ausgeführt werden, den einen oder die mehreren Prozessoren veranlassen, Operationen durchzuführen, die umfassen:
Empfangen von Nutzerpräferenzen in Bezug auf das Sammeln von Nutzungsdaten und Verhaltensdaten eines Nutzers bei Nutzung eines mobilen Geräts;
Sammeln von Nutzungsdaten des Benutzers bei Nutzung des mobilen Geräts, einschließlich des Sammelns von Informationen über Nutzerpräferenzen in Bezug auf den Konsum von Multimedia-Inhalten bei Nutzung des mobilen Geräts;
Sammeln von Verhaltensdaten des Benutzers, einschließlich des Sammelns von Benutzeraktivitätsinformationen über Interaktionen des Benutzers mit Anwendungen auf dem mobilen Gerät und Korrelieren zumindest eines Teils der Benutzeraktivitätsinformationen mit einer oder mehreren Auswahlen von Multimediainhalten über das mobile Gerät;
Speichern der Nutzungsdaten und Verhaltensdaten auf dem mobilen Gerät;
periodisches Senden der gespeicherten Nutzungsdaten und Verhaltensdaten von dem mobilen Gerät;
Überwachen mindestens einer Beschränkung des mobilen Geräts, wobei die mindestens eine Beschränkung des mobilen Geräts mindestens eine der folgenden Beschränkungen umfasst: Batterieverbrauch, Netzwerkgeschwindigkeit oder Verbindungsqualität;
Anfordern von Multimediainhalten durch das mobile Gerät basierend auf der mindestens einen überwachten Beschränkung;
Empfangen von Multimediainhalten, die auf dem mobilen Gerät zwischengespeichert werden sollen, um sie über das mobile Gerät auf der Grundlage der Nutzungsdaten und der Verhaltensdaten sowie auf der Grundlage der Anforderung wiederzugeben; und
Präsentieren des Multimediainhalts aus dem Zwischenspeicher.

## Revendications

1. Un procédé comprenant :
le fait de recevoir des préférences d'utilisateur concernant la collecte de données d'utilisation et de données de comportement d'un utilisateur (102) en utilisant un dispositif mobile (104) ;
le fait de collecter des données d'utilisation de l'utilisateur en utilisant le dispositif mobile, incluant le fait de collecter, en utilisant le dispositif mobile, des informations sur les préférences de l'utilisateur liées à la consommation de contenu multimédia ;
le fait de collecter des données de comportement de l'utilisateur, incluant le fait de collecter des informations sur l'activité de l'utilisateur concernant les interactions de l'utilisateur avec des applications (212) sur le dispositif mobile et le fait de corréler au moins une partie des informations sur l'activité de l'utilisateur avec une ou plusieurs sélections de contenu multimédia via le dispositif mobile ;
le fait de stocker les données d'utilisation et les données de comportement sur le dispositif mobile ;
le fait d'envoyer périodiquement, à partir du dispositif mobile, les données d'utilisation et les données de comportement stockées ;
le fait de surveiller au moins une contrainte du dispositif mobile, la ou les contraintes du dispositif mobile comprenant au moins l'une parmi l'utilisation de la batterie, la vitesse du réseau ou la qualité de connexion ;
le fait, par le dispositif mobile, de demander un contenu multimédia sur la base de la ou des contraintes surveillées ;
le fait de recevoir un contenu multimédia à mettre en pré-cache sur le dispositif mobile pour un rendu via le dispositif mobile sur la base des données d'utilisation et des données de comportement et sur la base de la demande ; et
le fait de présenter le contenu multimédia à partir du pré-cache.

2. Le procédé selon la revendication 1, dans lequel une taille du contenu multimédia à mettre en pré-cache sur le dispositif mobile est déterminée sur la base d'un ou plusieurs facteurs, le ou les facteurs comprenant une vitesse de téléchargement d'un reste du contenu multimédia non encore reçu par l'appareil mobile.

3. Le procédé selon la revendication 1, dans lequel la réception d'un contenu multimédia à mettre en pré-cache sur le dispositif mobile comprend le fait de recevoir uniquement du contenu multimédia qui est requis pour qu'une vignette ou une carte multimédia soit présentée par le dispositif mobile.

4. Le procédé selon la revendication 1, dans lequel la collecte de données d'utilisation de l'utilisateur en utilisant le dispositif mobile comprend le fait de collecter des informations de préférences de l'utilisateur liées à la consommation de contenu multimédia en utilisant une application de surfaçage (302) du dispositif mobile ; et
les données de comportement sont collectées sur la base de la détection d'un événement publié par l'application de surfaçage.

5. Le procédé selon la revendication 1, dans lequel les données d'utilisation et les données de comportement sont des données de l'utilisateur, d'un ou plusieurs groupes auxquels l'utilisateur est associé, ou d'un ensemble d'utilisateurs quel que soit l'utilisateur.

6. Le procédé selon la revendication 1, comprenant en outre :
le fait de surveiller les sélections et les préférences de consommation de contenu de l'utilisateur sur le dispositif mobile.

7. Le procédé selon la revendication 1, comprenant en outre :
le fait d'appliquer les préférences de l'utilisateur aux données d'utilisation et aux données de comportement ; et
le fait de gérer l'envoi des données d'utilisation et des données de comportement conformément aux préférences d'utilisateur appliquées.

8. Le procédé selon la revendication 1, comprenant en outre :
le fait de sélectionner le contenu multimédia pré-caché à présenter.

9. Un appareil mobile, comprenant :
un ou plusieurs processeurs (206) ;
une interface utilisateur (204) ; et
une mémoire (208) dans laquelle sont stockées des instructions exécutables par ordinateur qui, si elles sont exécutées par le ou les processeurs, amènent le ou les processeurs à effectuer des opérations comprenant :
le fait de recevoir des préférences d'utilisateur concernant la collecte de données d'utilisation et de données de comportement d'un utilisateur en utilisant un dispositif mobile ;
le fait de collecter des données d'utilisation de l'utilisateur en utilisant le dispositif mobile, incluant le fait de collecter, en utilisant le dispositif mobile, des informations sur les préférences de l'utilisateur liées à la consommation de contenu multimédia ;
le fait de collecter des données de comportement de l'utilisateur, incluant le fait de collecter des informations sur l'activité de l'utilisateur concernant les interactions de l'utilisateur avec des applications sur le dispositif mobile, et le fait de corréler au moins une partie des informations sur l'activité de l'utilisateur avec une ou plusieurs sélections de contenu multimédia via le dispositif mobile ;
le fait de stocker les données d'utilisation et les données de comportement sur le dispositif mobile ;
le fait d'envoyer périodiquement, à partir du dispositif mobile, les données d'utilisation et les données de comportement stockées ;
le fait de surveiller au moins une contrainte du dispositif mobile, la ou les contraintes du dispositif mobile comprenant au moins l'une parmi l'utilisation de la batterie, la vitesse du réseau ou la qualité de connexion ;
le fait de demander un contenu multimédia sur la base de la ou des contraintes surveillées ;
le fait de recevoir un contenu multimédia à mettre en pré-cache sur le dispositif mobile pour un rendu via le dispositif mobile sur la base des données d'utilisation et des données de comportement et sur la base de la demande ; et
le fait de présenter le contenu multimédia du pré-cache.

10. Le dispositif mobile selon la revendication 9, dans lequel la mémoire comprend :
une application de surfaçage (302) configurée pour restituer le contenu multimédia via une interface utilisateur sur le dispositif mobile pour que l'utilisateur puisse visualiser le contenu multimédia et sélectionner le contenu multimédia à restituer, et
une application (304) de collecte d'utilisation et de comportement configurée pour surveiller la sélection de contenu multimédia et les préférences de consommation de contenu multimédia de l'utilisateur,
l'application de surfaçage et l'application de collecte d'utilisation et de comportement étant respectivement configurées pour s'interfacer avec une interface (306) de programmation d'application côté serveur.

11. Le dispositif mobile selon la revendication 9, dans lequel les données d'utilisation et les données de comportement sont des données de l'utilisateur, d'un ou plusieurs groupes auxquels l'utilisateur est associé, ou d'un ensemble d'utilisateurs quel que soit l'utilisateur.

12. Le dispositif mobile selon la revendication 9, dans lequel les opérations comprennent en outre :
le fait de surveiller les sélections et les préférences de consommation de contenu de l'utilisateur sur le dispositif mobile.

13. Le dispositif mobile selon la revendication 9, dans lequel les opérations comprennent en outre :
le fait d'appliquer les préférences de l'utilisateur aux données d'utilisation et aux données de comportement ; et
le fait de gérer l'envoi des données d'utilisation et des données de comportement conformément aux préférences d'utilisateur appliquées.

14. Un support non transitoire lisible par ordinateur stockant des instructions qui, si elles sont exécutées par un ou plusieurs processeurs, amènent le ou les processeurs à effectuer des opérations comprenant :
le fait de recevoir des préférences d'utilisateur concernant la collecte de données d'utilisation et de données de comportement d'un utilisateur utilisant un dispositif mobile ;
le fait de collecter des données d'utilisation de l'utilisateur utilisant le dispositif mobile, incluant le fait de collecter, en utilisant le dispositif mobile, des informations sur les préférences de l'utilisateur liées à la consommation de contenu multimédia ;
le fait de collecter des données de comportement de l'utilisateur, incluant le fait de collecter des informations sur l'activité de l'utilisateur concernant les interactions de l'utilisateur avec des applications sur le dispositif mobile et la corrélation d'au moins une partie des informations sur l'activité de l'utilisateur avec une ou plusieurs sélections de contenu multimédia via le dispositif mobile ;
le fait de stocker les données d'utilisation et les données de comportement sur le dispositif mobile ;
le fait d'envoyer périodiquement, à partir du dispositif mobile, les données d'utilisation et les données de comportement stockées ;
le fait de surveiller au moins une contrainte du dispositif mobile, la ou les contraintes du dispositif mobile comprenant au moins l'une parmi l'utilisation de la batterie, la vitesse du réseau ou la qualité de connexion ;
le fait de demander, par le dispositif mobile, un contenu multimédia sur la base de la ou des contraintes surveillées ;
le fait de recevoir un contenu multimédia à mettre en pré-cache sur le dispositif mobile pour un rendu via le dispositif mobile sur la base des données d'utilisation et des données de comportement et sur la base de la demande ; et
le fait de présenter le contenu multimédia à partir du pré-cache.
